# EUROPEAN PATENT APPLICATION

(11) **EP 4 654 086 A1**
(43) Date of publication of application: **26.11.2025**
(21) Application number: 24177128.6
(22) Date of filing: 21.05.2024
(51) Int. Cl.: G06N 3/0895, G06N 3/045, G06N 5/045, G06N 3/0464, G06N 3/0475

(54) **SYSTEM AND METHOD FOR HOLISTIC MODEL QUALITY IMPROVEMENT USING EXPLAINABILITY INFUSED ACTIVE LEARNING**

(71) Applicant: Siemens Aktiengesellschaft, 80333 München (DE)
(72) Inventor: Kumar, Ashish, 835222 Ranchi, Jharkhand (IN); Maskeri Rama, Girish, 560095 Bangalore (IN)
(74) Representative: Isarpatent

(57) **Abstract**

Presented is a system (100) and a computer-implemented training method (200) for machine-learned (ML) vision models to perform training on a training dataset that comprises a plurality of unlabeled images and a plurality of labeled images. The method (200) comprising of training a machine-learned model using the plurality of unlabeled images and obtaining a respective label for each unlabeled datapoint to transform the unlabeled images into weak supervision labeled images. Then, calculating an uncertainty sampling metrics based on a confidence score associated with the training dataset and determining an area under an explainability metrics based on a change in the confidence score. Thereafter, obtaining a selection of the unlabeled datapoints for training of the ML model based on the confidence scores and a model explainability and retraining the machine-learned model based on the training dataset comprising of the plurality of labeled images, wherein the labeling of the images is supervised by an annotator.

## Description

The present invention relates generally to the field of Industrial Automation, and specifically to methods and systems for training supervised Machine Learned models to develop high-quality few shot learning models using explainability-based active learning.

In various industrial applications, including but not limited to drum inspection, circuit board inspection, metal stamping, packaging detection, and rail obstacle detection, industrial products integrate Artificial Intelligence (Al) and Machine Learning (ML) components. These components are pivotal for enhancing operational efficiency and ensuring product quality. However, achieving industry-grade quality in visual perception-based AI/ML systems presents significant challenges. These systems are expected to operate reliably across diverse environmental conditions and usage scenarios, many of which are unpredictable.

Traditionally, the evaluation of AI/ML models has been primarily focused on performance metrics such as accuracy and F1 score. However, in industrial Artificial Intelligence (Al) applications, quality encompasses not only precision but also robustness, reliability, and other non-functional characteristics. Furthermore, building Machine Learning (ML) models for industry-specific use cases necessitates deep domain knowledge integration to address performance gaps and enhance model robustness. Existing AI/ML systems employ "active learning" techniques to iteratively select new examples for labeling and inclusion in the training dataset. However, existing active learning approaches primarily utilize uncertainty or diversity-based metrics to improve functional performance. While annotators invest significant effort in categorizing images, there is a lack of techniques for image dataset annotation tailored to industrial Al applications. Consequently, there is a dearth of methods capable of holistically enhancing the quality of ML models by addressing both functional and non-functional attributes.

Therefore, the object of the present invention is a computer-implemented training method for machine-learned (ML) vision models to perform training on a training dataset that comprises a plurality of unlabeled images and a plurality of labeled images, as disclosed herein.

The method comprises of, for each of one or more training iterations, training a machine-learned model using at least a portion of the plurality of unlabeled images. Further, a respective label is obtained for each unlabeled datapoint to transform the unlabeled images into weak supervision labeled images. Furthermore, an uncertainty sampling metrics is calculated based on a confidence score associated with the training dataset. An area under an explainability metrics is determined based on a change in the confidence score. Thereafter, a selection of the unlabeled datapoints for training of the ML model is obtained based on the confidence scores and a model explainability and the machine-learned model is retrained based on the training dataset comprising of the plurality of labeled images, wherein the labeling of the images is supervised by an annotator. This provides an explainability infused active learning method that results not only improve the model's accuracy but also enhance its robustness, reliability, and generalization capabilities. By focusing on data points that are challenging or uncertain, the ML model learns to better handle edge cases and real-world scenarios.

The step of model explainability comprising of at least one of an insertion game or a deletion game, and wherein the training dataset is an image. The Insights gained from the insertion or deletion games can inform the selection of training data. Data points that have a substantial impact on the model's predictions, as determined by the insertion and deletion games, can be prioritized for inclusion in the training dataset. This ensures that the dataset contains diverse and informative examples that contribute effectively to the model's learning process.

The step of explainability metrics further comprises optimization of the unlabeled data using an insertion game wherein the insertion process comprises of insertion of pixels in the intentionally made blurred training dataset to generate an unblurred image dataset. Thereafter, training the machine-learned model using blurred image dataset to obtain a confidence score associated with the blurred image dataset and calculating an area under the insertion game curve based on the confidence score change associated with the insertion of pixels. Advantageously, generating an unblurred image dataset through the insertion of pixels, user gains insights into how the model's predictions change in response to variations in the input data, thus deepening the understanding of the model's behavior and decision-making process.

The step of explainability metrics further comprises optimization of the unlabeled data using a deletion game, wherein the deletion game comprises of deletion of a distribution of pixels of targeted object from the training dataset to generate the deletion image dataset. The machine-learned model is trained using the deletion image dataset to obtain a confidence score associated with the deletion image dataset and an area under the deletion game curve is calculated based on the confidence score change associated with the deletion of pixels.

The step of optimal action further comprises displaying the plurality of options along with the respective probabilities and the previous success rate at each action of the one or more actions. The display of the probability facilitates comparative analysis between different options. Advantageously, the iterative nature of the deletion game enables continuous refinement of the model over multiple iterations. By iteratively adjusting the training dataset based on the deletion game results, developers can progressively enhance the model's performance, robustness, and generalization capabilities.

The step of the selection of the unlabelled datapoint further comprises determining a target feature datapoints of the plurality of unlabelled images based on the calculation of the area under at least one of the insertion game curve or the deletion game curve. Advantageously, metrics derived from the insertion and deletion games to select unlabeled datapoints based on areas under the curves offers a systematic and efficient approach to improving model performance, generalization, and overall quality.

The step of generating a saliency map based on the area under insertion game curve, the area under deletion game curve, the uncertainty sampling metrics and the explainability metrics, wherein the explainability metrics is generate using an explainability algorithm on a selected unlabeled datapoints of the training dataset. The saliency map highlights most important features of the training dataset that influence the ML vision model, and wherein a robustness degree of the ML vision model is determined based on the generated saliency map. The saliency map provides a visual representation of the most important features, facilitating a deeper understanding of how these features contribute to the model's behavior. This insight helps developers interpret the model's predictions and identify areas for improvement or optimization. By assessing the robustness of the ML vision model based on the generated saliency map, developers can gauge the model's ability to make accurate predictions in the presence of variations or perturbations in the input data.

The method further comprising: display, on a display device, the saliency map, insertion game curve, the deletion game curve, explainability metrics, the confidence scores associated with the training dataset, and entropy based active learning metrics to assist the user in the supervision of the training dataset. The display of various metrics on a display device enhances model supervision, interpretability, and user engagement, ultimately facilitating more effective and transparent machine learning model development.

The step of supervision of the training dataset comprises of addition of comments on the selected unlabeled datapoints, and rating unlabeled datapoints using the displayed data associated with the target feature, and wherein the annotator is a user. The involvement of annotators as users in the supervision of the training dataset through comments and ratings enhances the quality, relevance, and transparency of the model development process, ultimately leading to more effective machine learning models.

The step of a trustworthy evaluation of the ML vision model based on the rating of the unlabeled datapoints, wherein selection of the unlabeled datapoints for each iteration is based on the trustworthy evaluation. Therefore, conducting a trustworthy evaluation of the ML vision model based on ratings of unlabeled datapoints ensures the reliability, transparency, and effectiveness of the model training process, ultimately leading to the development of high-quality machine learning models.

Throughout the present disclosure, the term "industrial environment" may refer to plurality of industrial assets connected with each other to achieve a function. The industrial environment may be comprised of industrial assets such as industrial machines, industrial devices, industrial controllers, and so forth.

Throughout the present invention, it is to be understood that the terms "user", "expert" or "annotator" are utilized interchangeably to depict a user involved in the loop to either provide an input or provide supervision for the data. For example: when the display interface is provided to the user, the user may input the rating or comments.

Throughout the present invention, it is to be understood that the terms "processor" and "processing units" are utilized interchangeably to depict a processor of the system configured to perform processing according to an embodiment of the present invention.

The object of the invention is also achieved by a computer program product comprising machine readable instructions, that when executed by one or more processing units, cause the one or more processing units to perform the aforementioned method steps. The computer program product further comprises a storage unit communicatively coupled to the one or more processing units. The storage unit comprises a module stored in the form of machine-readable instructions executable by the one or more processing units. The module is configured to perform method steps as described above. The execution of the module may also be performed using co-processors such as Graphical Processing Unit (GPU), Field Programmable Gate Array (FPGA) or Neural Processing/Compute Engines.

The object of the present invention is further achieved by a computer readable medium on which program code sections of a computer program are saved, the program code sections being loadable into and/or executable in a system to make the system execute the method steps described above when the program code sections are executed in the system. This summary is provided to introduce a selection of concepts in a simplified form that are further described below in the following description. It is not intended to identify features or essential features of the claimed subject matter. Furthermore, the claimed subject matter is not limited to implementations that solve any or all disadvantages noted in any part of this invention.

The realization of the invention by a computer program product and/or a non-transitory computer-readable storage medium has the advantage that computer systems can be easily adopted by installing computer program in order to work as proposed by the present invention.

The computer program product can be, for example, a computer program or comprise another element apart from the computer program. This other element can be hardware, for example a memory device, on which the computer program is stored, a hardware key for using the computer program and the like, and/or software, for example a documentation or a software key for using the computer program.

The above-mentioned attributes, features, and advantages of the present invention and the manner of achieving them, will become more apparent and understandable (clear) with the following description of embodiments of the invention in conjunction with the corresponding drawings. The illustrated embodiments are intended to illustrate, but not limit the invention.

The present invention is further described hereinafter with reference to illustrated embodiments shown in the accompanying drawings, in which:
FIG 1 is a block diagram representation of a system for training of machine-learned (ML) vision models to perform training on a training dataset, in accordance with one or more embodiments of the present invention;
FIG 2 is a flowchart of a training method for machine-learned (ML) vision models to perform training on a training dataset, in accordance with one or more embodiments of the present invention;
FIG 3 is an illustration of a flow diagram of the holistic model quality improvement system for a machine learned vision model, in accordance with one or more embodiments of the present invention;
FIG 4 is a depiction of a deletion game graph, in accordance with one or more embodiments of the present invention; and
FIG 5 is a depiction of an insertion game graph, in accordance with one or more embodiments of the present invention.
FIG 6 is a depiction of a saliency map associated with the training dataset, in accordance with one or more embodiments of the present invention.
FIG 7 is a depiction of a display interface available to an annotator, in accordance with one or more embodiments of the present invention.
FIG 8 is a depiction of a first example of a user in the loop methodology, in accordance with one or more embodiments of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

The present invention discloses a novel training method for machine-learned (ML) vision models to perform training on a training dataset that comprises a plurality of unlabelled images and a plurality of labelled images. The present invention addresses this challenge by determining explainability metrics based on a change in the confidence score.

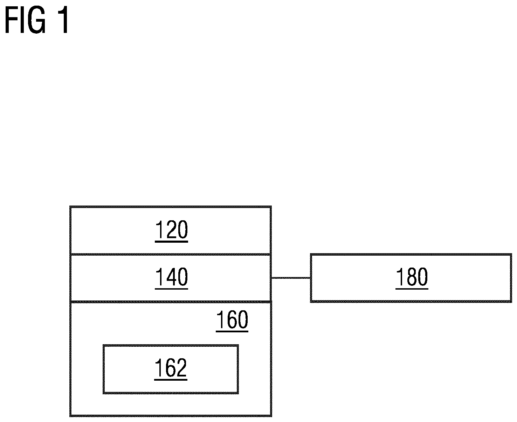

Referring to Fig. 1, illustrated is a system 100 for executing the training for the Machine-Learned model using a training dataset, in accordance with one or more embodiments of the present invention. It may be appreciated that the system 100 described herein may be implemented in various forms of hardware, software, firmware, special purpose processors, or a combination thereof. One or more of the present embodiments may take a form of a computer program product comprising program modules accessible from computer-usable or computer-readable medium storing program code for use by or in connection with one or more computers, processors, or instruction execution system. For the purpose of this description, a computer-usable or computer-readable medium may be any apparatus that may contain, store, communicate, propagate, or transport the program for use by or in connection with the instruction execution system, apparatus, or device. The medium may be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and digital versatile disc (DVD). Both processors and program code for implementing each aspect of the technology may be centralized or distributed (or a combination thereof) as known to those skilled in the art.

FIG 1 is a block diagram of a system 100 for executing the training for the Machine-Learned model using a training dataset, according to an embodiment of the present invention. The system includes an imaging system 120, a memory 160, an image processor 140, and a display 180. Additional, different, or fewer components may be provided. For example, a network or network connection is provided, such as for networking with a medical imaging network or data archival system. In another example, a user interface is provided.

The image processor 140, memory 160, and display 180 are part of the imaging system 120. Alternatively, the image processor 140, memory 160, and/or display 180 are part of an archival and/or image processing system, such as associated with industrial database workstation or server. In other embodiments, the image processor 140, memory 160, and/or display 180 are a computer, such as desktop or laptop, a workstation, a server, a network, or combinations thereof.

The imaging system 120 is an image capturing device configured to processes the pixel-level data from images, extracting meaningful features and representations. These features are then combined with the textual information to create a multimodal representation that allows the model to understand both visual and textual contexts. Cameras, Image sensors, fusion encoders, dual encoders or hybrid encoders may be used. The imaging system 120 may include a transmitter and includes a detector for scanning or receiving image data. In one embodiment, the imaging system 120 is a visual encoder. Images are captured using cameras or image sensors, which convert light into electrical signals. A labeled dataset is created with diverse samples after preprocessing of data that may include resizing, normalizing, and augmenting. The ML model is then trained on this data for image classification, segmentation, or object detection.

The memory 160 may be a graphics processing memory, a video random access memory, a random access memory, system memory, cache memory, hard drive, optical media, magnetic media, flash drive, buffer, database, combinations thereof, or other now known or later developed memory device for storing image data, artificial agents, and/or data and programs for generating and/or training an artificial agent. The memory 160 is part of the imaging system 120, part of a computer associated with the processor 140, part of a database, part of another system, a picture archival memory, or a standalone device.

The memory 160 or other memory is alternatively or additionally a non-transitory computer readable storage medium storing data representing instructions executable by the programmed processor 140 for generating and training an artificial agent for intelligent image parsing and evaluating medical images of a patient via the artificial agent. The instructions for implementing the processes, methods and/or techniques discussed herein are provided on non-transitory computer-readable storage media or memories, such as a cache, buffer, RAM, removable media, hard drive or other computer readable storage media. Non-transitory computer readable storage media include various types of volatile and nonvolatile storage media. The functions, acts or tasks illustrated in the figures or described herein are executed in response to one or more sets of instructions stored in or on computer readable storage media. The functions, acts or tasks are independent of the particular type of instructions set, storage media, processor or processing strategy and may be performed by software, hardware, integrated circuits, firmware, micro code and the like, operating alone, or in combination. Likewise, processing strategies may include multiprocessing, multitasking, parallel processing, and the like.

In one embodiment, the memory 160 comprises a testing module 162 stored in the form of machine-readable instructions executable by the one or more processing units. The module 162 is configured to perform method steps as described above. In other embodiments, the instructions are stored in a remote location for transfer through a computer network or over telephone lines. In yet other embodiments, the instructions are stored within a given computer, CPU, GPU, or system.

The image processor 140 is a general processor, central processing unit, control processor, graphics processor, digital signal processor, three-dimensional rendering processor, image processor, application specific integrated circuit, field programmable gate array, digital circuit, analog circuit, combinations thereof, or other now known or later developed device for generating and training an artificial agent for intelligent image parsing and evaluating medical images of a patient via the artificial agent. The image processor 140 is a single device or multiple devices operating in serial, parallel, or separately. The image processor 140 may be a main processor of a computer, such as a laptop or desktop computer, or may be a processor for handling some tasks in a larger system, such as in an imaging system. The image processor 140 is configured by instructions, design, hardware, and/or software to perform the acts discussed herein. The image processor may also be referred to as "processor" and "processing unit" or "one or more processing units" throughout the invention.

As of the solution, the image processor 140 interacts with the imaging system 120 or other source of scan data, stores data in different parts of the memory 160, and generates output to assist in training of the machine learned models. Manual annotation is highly inefficient, not cost effective, and uses different processes than the technical solution. The display 180 is a monitor, LCD, projector, plasma display, CRT, printer, or other now known or later developed devise for outputting visual information. The display 180 receives images, graphics, text, quantities, or other information from the processor 140, memory 160, or imaging system 120. One or more images or data is displayed. The image includes an indication, such as a graphic or colorization, of the boundary or other segmentation. Alternatively, or additionally, the image includes a quantity based on the boundary. The quantity may be displayed as the image without the medical image representation of the patient.

Throughout the present disclosure, the terms similar to "user device" and "one or more user devices" refers to any electronic device configured for capturing, acquiring, and transmitting data from a user to the apparatus. The user terminal may take various forms depending on the specific application of the system 100. In an example, the user device includes one or more of a keyboard, a mouse, a touchscreen display, a microphone, a camera, or any other hardware component that enables the user to interact with the system 100. In another example, the user device may comprise of multiple modes of acquisition of the data in addition to a user input and therefore the user devices may comprises of a combination of voice assistants, specialized input devices, data entry devices, touch screen interfaces, camera modules, digital cameras, surveillance cameras, aerial imaging devices, 3D imaging devices, wearable devices and the like. For the simplicity of this invention, we may refer to a single user device.

In one embodiment, the system 100 is deployed in a cloud computing environment. As used herein, "cloud computing environment" refers to a processing environment comprising configurable computing physical and logical resources, for example, networks, servers, storage, applications, services, etc., and data distributed over the network 120, for example, the internet. The cloud computing environment provides on-demand network access to a shared pool of the configurable computing physical and logical resources. The network 120 is referred as a distributed network or communication network throughout the invention. The apparatus 140 may include a module for managing access control for a plurality of metaverses or digital twins interacting in a computer simulated collaborative environment over a distributed network.

Additionally, the system 100 comprises a cloud computing device configured for providing cloud services for managing access control for a plurality of user devices 160A to 160N interacting in a computer simulated collaborative environment over a distributed network. The cloud computing device comprises a cloud communication interface, a cloud computing hardware and OS, and a cloud computing platform. The cloud computing hardware and OS may include one or more servers on which an operating system (OS) is installed and includes one or more processing units, one or more storage devices for storing data, and other peripherals required for providing cloud computing functionality. The cloud computing platform is a platform which implements functionalities such as data storage, data analysis, data visualization, data communication on the cloud hardware and OS via APIs and algorithms and delivers the aforementioned cloud services using cloud-based applications.

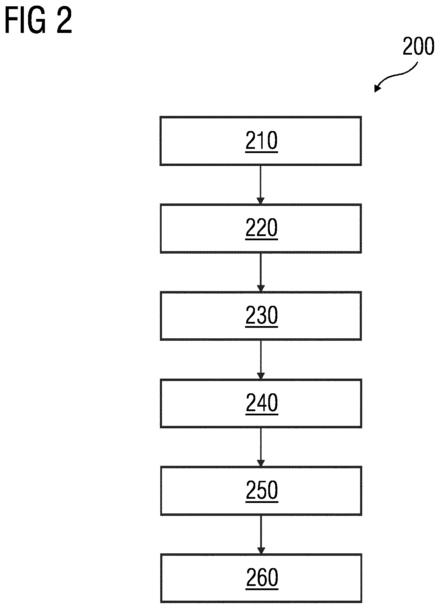

Referring to FIGS 1 and 2 in combination, the various steps of the method 300 as described hereinafter may be executed by the system 100, or specifically in the processor 140, for training the machine learned model using a training dataset. The method disclosed in FIG 2 depicts a flow chart 200 of a training method for machine-learned (ML) vision models to perform training on a training dataset. In one or more embodiments of the present invention, at step 210, the processor 140 is configured to receive data comprising of unlabeled and labeled data. The unlabeled data are data points (e.g., images) without associated ground truth labels or annotations. The labeled data are data points with known labels (e.g., class labels or annotations). In step 220, using active learning method, a respective label is obtained for each unlabeled datapoint to transform the unlabeled images into weak supervision labeled images. The machine learned model (or an external system) predicts labels (pseudo-labels) for the unlabeled datapoints. These predicted labels serve as weak supervision. The unlabeled images now have associated pseudo labels that may require more refining.

In step 230, an uncertainty sampling metrics is calculated based on a confidence score associated with the training dataset. The calculation involves assessing the uncertainty of the model's predictions. Each prediction has an associated confidence score indicating how certain the model is about its prediction. Uncertainty sampling is a method configured to calculate a metric (e.g., entropy) based on these confidence scores. High uncertainty indicates that the model is unsure about its predictions. Further step 240 includes assessing the machine learned model to understand the model's behavior. The assessment further includes determining an area under an explainability metric based on changes in the confidence score to assist in evaluation of how well the model's predictions align with human intuition or domain knowledge. In step 250, based on the confidence scores and the model explainability, a selection of the unlabeled datapoints is obtained for training of the ML model. The label for the unlabeled datapoints is confirmed by an annotator. The annotator may be a subject expert or a robot being used as an expert to confirm the labels to convert the weak supervised labels into final labels for the data/dataset used for training the machine-learned model. In step 260 the machine-learned model is retrained based on the training dataset comprising of the plurality of labeled images. This will include the dataset labeled based on the input from annotator. In one embodiment the data may be only supervised by an annotator. The annotator may provide the input using an input device such as monitor, keypad, touch-sensitive display, camera (such as a camera receiving gesture-based inputs), head mounted devices, etc. capable of receiving a primary input based on user's expressed or inferred intent, which may be provided through direct input (e.g., text input, voice commands) or inferred from user behavior and context. The display 180 may provide ports to output data via output device with a graphical user interface for displaying one or more options for actions in the computer simulated virtual environment.

Those of ordinary skilled in the art will appreciate that the hardware depicted in FIG 1 may vary for implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter also may be used in addition to or in place of the hardware depicted. The depicted example is provided for the purpose of explanation only and is not meant to imply architectural limitations with respect to the present disclosure.

The present invention is not limited to a particular computer system platform, processing unit, operating system, or network. One or more aspects of the present invention is distributed among one or more computer systems, for example, servers configured to provide one or more services to one or more client computers, or to perform a complete task in a distributed system. For example, one or more aspects of the present invention is performed on a client-server system that includes components distributed among one or more server systems that perform multiple functions according to various embodiments. These components comprise, for example, executable, intermediate, or interpreted code, which communicate over a network using a communication protocol. The present invention is not limited to be executable on any particular system or group of system, and is not limited to any particular distributed architecture, network, or communication protocol.

Therefore, the proposed solution provides an improved mechanism of explainable active learning. By employing the proposed solution can x the amount of labeled data needed to train a machine learning model is significantly reduced. Therefore, the present invention addresses a key challenge in traditional active learning methods, where the rationale behind selecting specific data samples for labelling may not always be transparent. The lack of transparency can hinder adoption, especially in contexts where trust and accountability are paramount. Explainable active learning provides clear and comprehensible explanations for the data samples chosen by the active learning process, enhancing trust and facilitating adoption of the model.

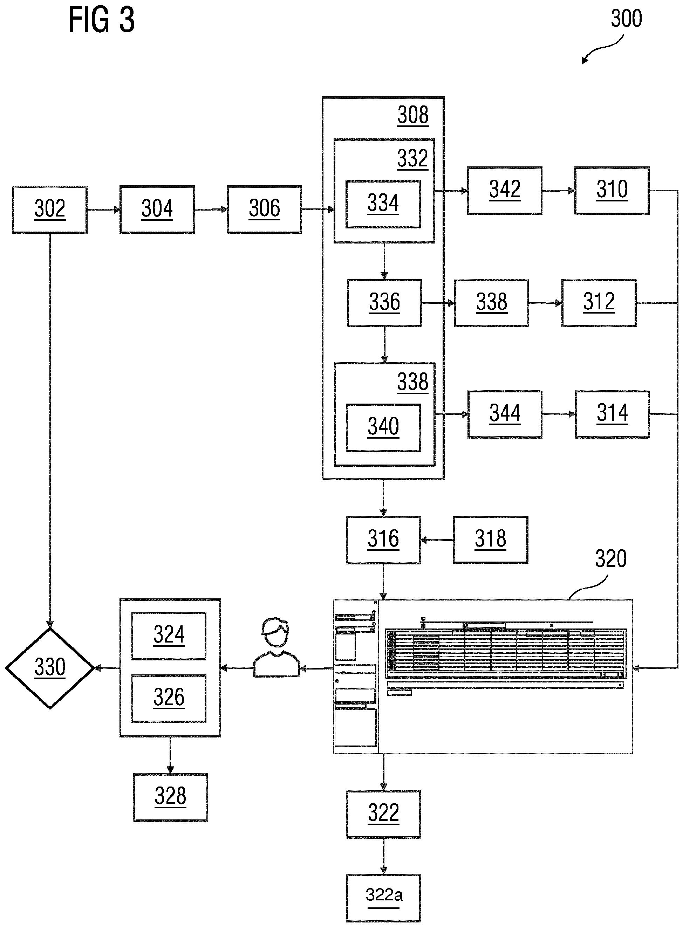

Illustrated in FIG 3 is a flow diagram 300 of the holistic model quality improvement system for a machine learned vision model. A machine learned model 304 is selected from a plurality of machine learned vision models 302. Machine-learned ML vision models 302 may include, but not limited to, Convolutional Neural Networks (CNNs) for tasks like image classification and object detection, Generative Adversarial Networks (GANs) for image generation, and attention-based models like Transformers, catering to tasks such as image captioning and object recognition. An unlabeled image 306 is selected as a training image for the model training system and is passed through the ML model to generate labeled images without supervision, therefore called, weak supervision labeled images 308. Thereafter, the original unlabeled image 306 is utilized to generate confidence score 336 to generate the uncertainty metrics thereafter.

Determining a target feature using an insertion game curve 342 or deletion game curve 344 involves analyzing how the model's performance changes as elements are inserted into or deleted from the input data. The insertion game 310 involves iteratively augmenting the original unlabeled image with additional elements or features. These modifications are systematically introduced to create a series of modified images. Each modified image is then processed through the selected machine-learned vision model to generate predictions or labels. The resulting confidence scores, indicative of the model's certainty in its predictions, are recorded for each modified image. By plotting these confidence scores against the number of inserted elements, an insertion game curve is formed. The area under this curve quantifies the cumulative change in model confidence as elements are inserted into the image. This metric provides valuable insights into the model's sensitivity to added information and its robustness in handling augmented input data.

Conversely, the deletion game 314 involves systematically removing elements or features from the original unlabeled image, generating a series of modified images with decreasing complexity. Each modified image is processed through the machine-learned vision model, and confidence scores are recorded for the model's predictions. Plotting these confidence scores against the number of deleted elements yields a deletion game curve. The area under this curve reflects the cumulative change in model confidence as elements are removed from the image. This metric offers valuable insights into the model's sensitivity to changes in input data and its resilience to information loss. The target feature can be determined by analyzing the point at which the model's performance begins to degrade or deviate significantly from its baseline performance as elements are inserted. This degradation may indicate that the inserted elements are introducing noise or irrelevant information, causing the model to make less accurate predictions or become less confident in its decisions. The feature(s) corresponding to the inserted elements at this point can be identified as the target feature(s) that significantly impact the model's performance. Similarly, in a deletion game, elements are gradually removed from the input data, and the model's performance is monitored. The target feature can be determined by analyzing the point at which the model's performance experiences a significant drop or deviation from its baseline performance as elements are deleted. This drop in performance suggests that the deleted elements were critical for the model's accurate predictions or confident decisions. The feature(s) corresponding to the deleted elements at this point can be identified as the target feature(s) that are essential for maintaining the model's performance. In summary, determining a target feature using insertion and deletion game curves involves identifying the features whose addition or removal has the most significant impact on the model's performance.

The uncertainty sampling metrics 312, area under the insertion curve and the area under the deletion curve are all displayed on a display screen. Additionally, an explainability algorithm 318 of the ML model is applied on the weak supervision label image to generate explainability metrics 316. The explainability algorithm 318 for the ML model is a method used to understand and interpret the decisions or predictions made by the model. The explainability algorithms may be one of, but not limited to permutation feature importance methods for e.g. SHAP (SHapley Additive exPlanations), and LIME (Local Interpretable Model-agnostic Explanations), Partial Dependence Plots (PDP), Individual Conditional Expectation (ICE) Plots, Decision Trees Visualization, Layer-wise Relevance Propagation (LRP), Attention Mechanisms, or Counterfactual Explanations. The explainability metrics 316 is also displayed on the display screen. Based on the explainability metrics 316, the uncertainty sampling metrics, the area under the insertion, and the deletion curve, a saliency map 322 is generated which may further be utilized to evaluate the robustness 322a of the ML model. A robustness degree of the ML vision model is determined based on the generated saliency map. Data displayed on the display screen 320 is presented to an expert/user to be supervised. Separate column for rating 324 and comments 326 relating to the unlabeled image is available for the user. The user may rate unlabelled image that is the training image from 1 to 5 based on the displayed data. The ratings may vary based on the design of the training system. However, for the purpose of this invention, we may consider the rating 5 to demonstrate that the high trustworthiness of the model and 1 to demonstrate the lowest trustworthiness of the model. Based on the trustworthiness evaluation 328 of the model based on the user rating, a particular example 330 may be selected for the training of the model.

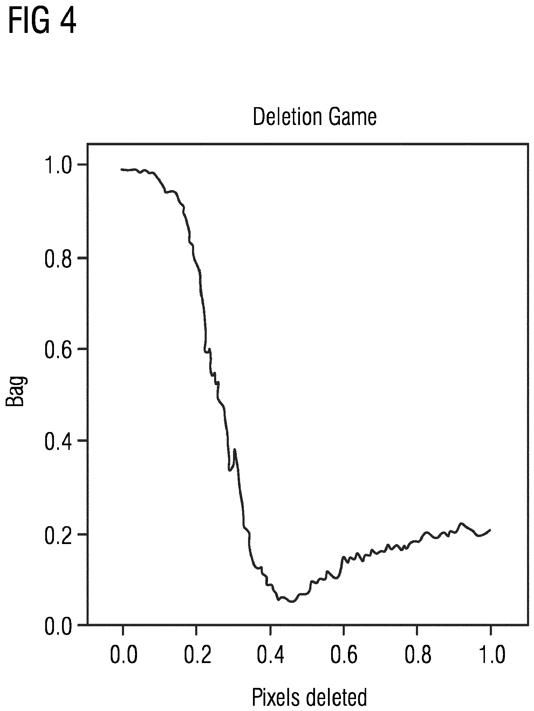

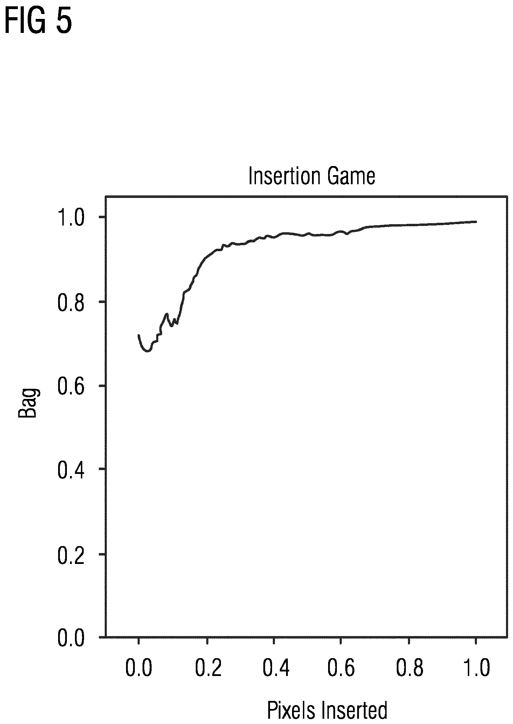

Referring to FIG 4, illustrated is a Deletion Game (DG) curve as described earlier. The deletion game curve describes the change in the deletion of pixel in comparison to the confidence score of the object. For a robust and trustworthy model, area under DG curve should be close to 0 and IG curve should be close to 1. DG and IG represents the model explainability, an example is shown in Figure 5 in terms of number.

Referring to FIG 5, illustrated is an Insertion Game curve as described earlier also. The insertion game curve describes the change in the confidence scores against the number of inserted elements to create the insertion game curve. The insertion game involves iteratively augmenting the original unlabeled image with additional elements or features. These modifications are systematically introduced to create a series of modified images. Each modified image is then processed through the selected machine-learned vision model to generate predictions or labels. The resulting confidence scores, indicative of the model's certainty in its predictions, are recorded for each modified image. By plotting these confidence scores against the number of inserted elements, an insertion game curve is formed. The area under this curve quantifies the cumulative change in model confidence as elements are inserted into the image. This metric provides valuable insights into the model's sensitivity to added information and its robustness in handling augmented input data.

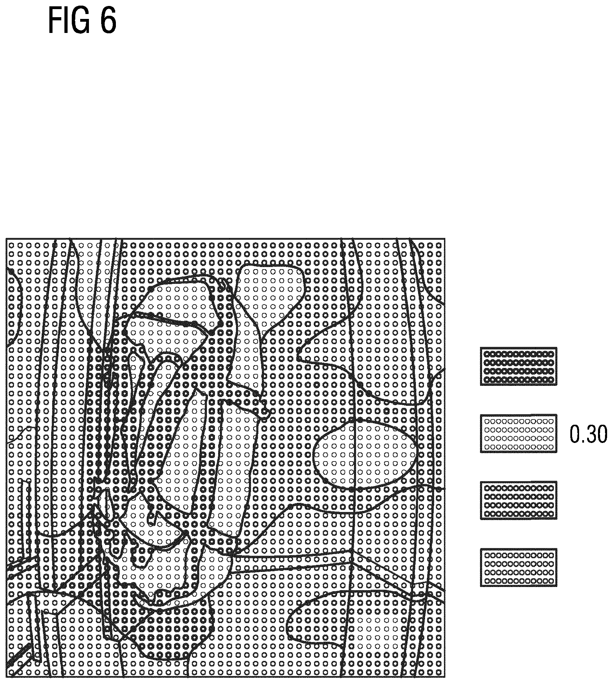

Referring to FIG 6, illustrated is a saliency map. The saliency map is created using the insertion and deletion game curves wherein the insertion or the deletion game curves includes leveraging the insights gained from how the model's confidence scores change as elements are added to or removed from the input data. Analyzing both the insertion and deletion game curves to identify inflection points or regions where the model's confidence scores exhibit significant changes, wherein the inflection points indicate where the model's predictions are most sensitive to changes in the input data. Thereafter, the insertion and deletion game curves are overlayed to visualize areas of high and low model sensitivity. Regions where the insertion game curve deviates significantly from the deletion game curve represent areas where adding elements has a substantial impact on the model's confidence, indicating salient features. Conversely, regions where the deletion game curve deviates significantly from the insertion game curve represent areas where removing elements has a substantial impact, also indicating salient features. Based on the identified salient regions from the overlaid curves, a saliency map highlighting these regions in the original input data.

This saliency map visually represents the most influential features (represented by the darker point cloud) or regions of the input data (represented by the lighter point cloud) that contribute to the model's predictions, providing insights into the model's decision-making process.

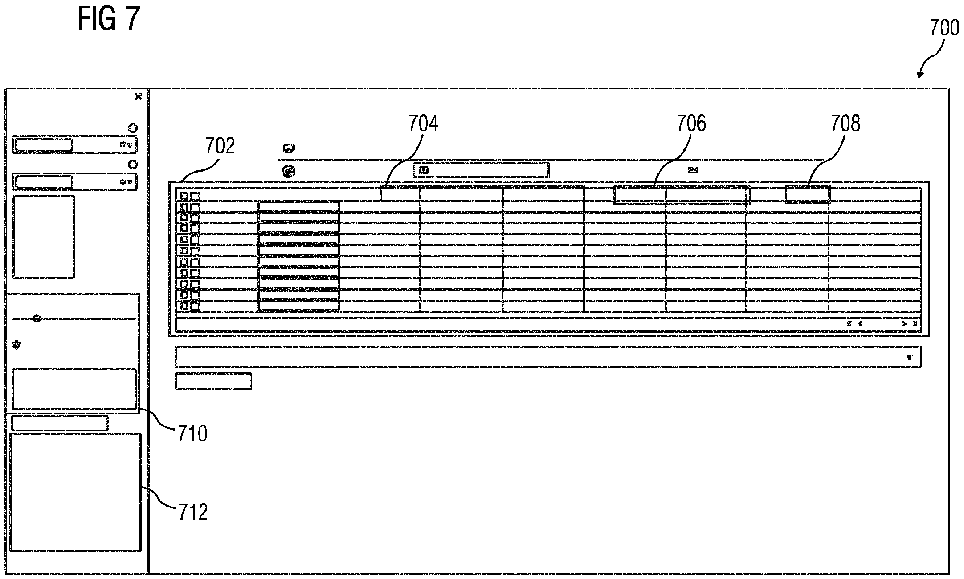

Referring to FIG 7, illustrated is a display interface 700 available to an annotator. The display interface 700 includes an explainability and active learning metrics 702 at a single place further including confidence score, explainability metrics and active learning metrics. Further the display includes a saliency map for displaying the model robustness and a window provided to the user to input a rating or comment for trustworthy evaluation. There may be more windows, for example but not limited to, selection of the type of active learning or an optional selection for query strategy. The display interface depicted in FIG 7 should not be construed as the exclusive embodiment and may encompass variations beyond those illustrated.

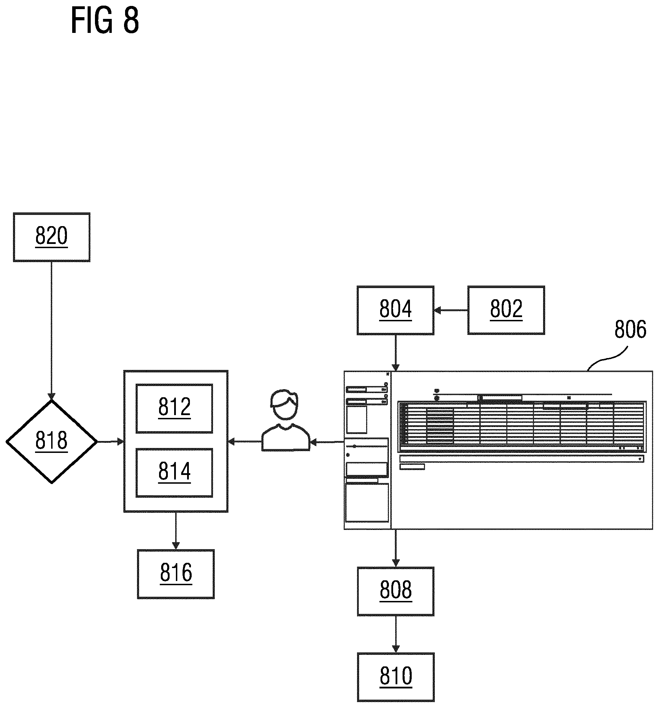

Referring to FIG 8, illustrated is first example 800 of a user in the loop methodology. An explainability algorithm 802 is utilized to select an example 804 to train the machine-learned model. Based on the analysis of the example as mentioned above in FIGs 3-6, the display interface 806 to be displayed on the display device is generated. This may result in robustness evaluation 810 using the saliency map 808. The user accesses the display interface using an input device. The user or the annotator may further provide rating 812 for the prediction done by the machine learned model. Additionally, the user may also provide comments 814 relating to the prediction or the specific training dataset/example used. The rating 812 and the comments 814 result in a "trustworthy evaluation" of the Machine learned model. The trustworthy evaluation 816, in this case, refers to assessing the reliability, accuracy, and overall quality of the model's outputs based on human judgment or expertise. This evaluation aims to determine the degree of confidence that stakeholders can place in the model's predictions and recommendations. Based on the trustworthy evaluation 816, the selected example 804 may be flagged 818 to be used for the model training system 820.

The present invention leverages explainability-based active learning to enhance the robustness and trustworthiness of machine learning models. Unlike traditional methods that rely solely on uncertainty or diversity-based active learning to increase accuracy through more data, recent studies indicate that the quality of the dataset is more crucial than its quantity. Our method significantly reduces the amount of labeled data required by focusing on high-quality, relevant samples, even enabling effective few-shot learning. By combining explainability metrics with active learning, our approach provides clear, understandable reasons for selecting specific data samples, ensuring that the active learning process is both efficient and interpretable. The integration of saliency maps, insertion and deletion game metrics, and model-agnostic active learning logic refines dataset selection, ensuring that only the most informative samples are chosen. This method also incorporates feedback mechanisms, such as ratings and comments from annotators, which serve to assess the model's trustworthiness and robustness while ensuring high-quality labeling. Additionally, the use of weak supervision labels in conjunction with explainability and active learning techniques streamlines the labeling process, reducing reliance on extensive manual annotations and accelerating model development. The transparency and accountability provided by explainable active learning make our method particularly suitable for sensitive domains, encouraging adoption in fields where trust is paramount. Overall, our holistic approach optimizes every step of the model improvement process, resulting in accurate, robust, and reliable machine learning models.

While the present invention has been described in detail with reference to certain embodiments, it should be appreciated that the present invention is not limited to those embodiments. In view of the present invention, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope.

### List of used reference symbols

- 100: system for executing a training for the Machine-Learned model
- 120: imaging system
- 140: image processor
- 160: memory
- 162: testing module
- 180: display

- 200: flow chart
- 210: step
- 220: step
- 230: step
- 240: step
- 250: step
- 260: step

- 300: flow diagram
- 302: plurality of machine learned vision models
- 304: machine learned model
- 306: unlabeled image
- 308: weak supervision labeled images
- 310: insertion game
- 312: uncertainty sampling metrics
- 314: deletion game
- 316: explainability metrics
- 318: explainability algorithm
- 320: display screen
- 322: saliency map
- 322a: robustness of the ML model
- 324: rating
- 326: comments
- 328: trustworthiness evaluation
- 330: example
- 336: confidence score
- 342: insertion game curve
- 344: deletion game curve
- 700: display interface
- 702: active learning metrics

- 800: example of a user in the loop methodology
- 802: explainability algorithm
- 804: selected example
- 806: display interface
- 808: saliency map
- 810: robustness evaluation
- 812: rating
- 814: comments
- 816: trustworthy evaluation
- 818: flagged
- 820: model training system

## Claims

1. A computer-implemented training method (200) for machine-learned (ML) vision models to perform training on a training dataset that comprises a plurality of unlabeled images and a plurality of labeled images, the method (200) comprising:
for each of one or more training iterations:
training, by one or more processor (140), a machine-learned model using at least a portion of the plurality of unlabeled images;
obtaining, by the one or more processor (140), a respective label for each unlabeled datapoint to transform the unlabeled images into weak supervision labeled images;
calculating, by the one or more processor (140), an uncertainty sampling metrics based on a confidence score associated with the training dataset;
determining, by the one or more processor (140), an area under an explainability metrics based on a change in the confidence score;
obtaining, by the one or more processor (140), a selection of the unlabeled datapoints for training of the ML model based on the confidence scores and a model explainability; and
retraining, by one or more processor (140), the machine-learned model based on the training dataset comprising of the plurality of labeled images, wherein the labeling of the images is supervised by an annotator.

2. The method (200) according to claim 1, wherein the model explainability comprises of at least one of an insertion game or a deletion game, and
wherein the training dataset is an image.

3. The method (200) according to claims 1 and 2, further comprising:
optimization of the unlabeled data, by the one or more processor (140), using an insertion game, wherein the insertion process comprises of insertion of pixels in the training dataset to generate a blurred image dataset;
training, by one or more processor (140), the machine-learned model using blurred image dataset to obtain a confidence score associated with the blurred image dataset; and
calculation of an area under the insertion game curve based on the confidence score change associated with the insertion of pixels.

4. The method (200) according to claims 1 to 3, further comprising:
optimization the unlabeled data using a deletion game, wherein the deletion game comprises of deletion of a distribution of pixels of targeted object from the training dataset to generate the deletion image dataset;
training, by one or more processor (140), the machine-learned model using the deletion image dataset to obtain a confidence score associated with the deletion image dataset; and
calculation of an area under the deletion game curve based on the confidence score change associated with the deletion of pixels.

5. The method (200) according to claims 1 to 4, the selection of the unlabeled datapoint further comprises:
determining, by the one or more processor (140), a target feature datapoints of the plurality of unlabeled images based on the calculation of the area under at least one of the insertion game curve or the deletion game curve.

6. The method (200) according to claims 1 to 5, further comprising:
generating, by one or more processor (140), a saliency map based on the area under insertion game curve, the area under deletion game curve, the uncertainty sampling metrics and the explainability metrics,
wherein the explainability metrics is generate using an explainability algorithm on a selected unlabeled datapoints of the training dataset,
wherein the saliency map highlights most important features of the training dataset that influence the ML vision model, and
wherein a robustness degree of the ML vision model is determined based on the generated saliency map.

7. The method (200) according to claim 1 to 6, further comprising: display, on a display device (180), the saliency map, insertion game curve, the deletion game curve, explainability metrics, the confidence scores associated with the training dataset, and entropy based active learning metrics to assist the user in the supervision of the training dataset.

8. The method (200) according to claim 1 to 7, wherein the supervision of the training dataset comprises of addition of comments on the selected unlabeled datapoints, and rating unlabeled datapoints using the displayed data associated with the target feature, and
wherein the annotator is a user.

9. The method (200) according to claim 1 to 8, further comprising: generating, by the one or more processor (140), a trustworthy evaluation of the ML vision model based on the rating of the unlabeled datapoints, wherein selection of the unlabeled datapoints for each iteration is based on the trustworthy evaluation.

10. An apparatus for machine-learned (ML) vision models to perform training on a training dataset that comprises a plurality of unlabeled images and a plurality of labeled images, the system (100) apparatus comprising:
one or more processing units (140); and
a memory unit (160) communicatively coupled to the one or more processing units (140), wherein the memory unit (160) comprises a testing module (162) stored in the form of machine-readable instructions executable by the one or more processing units (140),
wherein the testing module is configured to perform method (200) steps according to any of the claims 1 to 9.

11. A system (100) for creating and managing one or more computer simulated environments used for testing of an autonomous system (100), the system (100) comprising:
at least one user device; and
an apparatus according to claim 10, communicatively coupled to the at least one user device, wherein the apparatus is configured for managing the computer simulated environments used for testing of autonomous vehicles based on inputs received from the at least one user device, according to any of the method (200) claims 1 to 9.

12. A computer-program product having machine-readable instructions stored therein, which when executed by one or more processing units (140), cause the processing units to perform a method (200) according to any of the claims 1 to 9.
